# EUROPEAN PATENT APPLICATION

(11) **EP 3 783 692 A1**
(43) Date of publication of application: **24.02.2021**
(21) Application number: 19192625.2
(22) Date of filing: 20.08.2019
(51) Int. Cl.: H01M 2/16, H01M 10/615, H01M 10/625, H01M 10/653, H01M 10/6571, H01M 2/10

(54) **BATTERY MODULE FOR ELECTRIC VEHICLE**

(71) Applicant: Polestar Performance AB, 405 31 Gothenburg (SE)
(72) Inventor: Moon, Jongseok, 421 73 Västra Frölunda (SE)
(74) Representative: Valea AB

(57) **Abstract**

The present disclosure relates to a battery module (5) for powering propulsion of an electric vehicle (1). The battery module (5) comprises at least a first battery cell (7) and at least a first battery cell spacer (9) arranged adjacent to the at least first battery cell. An extension area (13) of the at least first battery cell spacer extends over at least a portion of an extension area (11) of the at least first battery cell. The at least first battery cell spacer comprises an electrically insulated heating element (15).

The disclosure also relates to a battery module system (3) comprising such a battery module and a battery pack comprising such a battery module system and/or such a battery module.

The disclosure also relates to an electric vehicle comprising such a battery pack and/or such a battery module system.

## Description

### TECHNICAL FIELD

The present disclosure relates to a battery module for powering propulsion of an electric vehicle. The present disclosure also relates to a battery module system comprising the battery module.

### BACKGROUND

Battery powered electric vehicles are starting to play a significant role in the automotive industry, one of the reasons being a desire to decrease carbon emissions associated with the use of internal combustion engine powered transportation.

Li-ion batteries are a commonly used type of battery in the construction of today's electric vehicles. A drawback of Li-ion batteries is the poor performance characteristics in cold temperatures. As such, when Li-ion batteries are used in an electric vehicle that is driven in climate zones where cold or very cold ambient temperatures appear, as is the case in e.g. the Scandinavian countries, the batteries need to be equipped with a heating system. The heating system works to heat the Li-ion batteries to a desired operational temperature before use at vehicle start-up.

For Hybrid and Plug-in Hybrid electrical vehicles, heat from the internal combustion engine is commonly available for heating the batteries in such situations. Battery electric vehicles, i.e. electric vehicles without an internal combustion engine, have to rely on other solutions to generate the heat necessary for heating the batteries to the desired operational temperature at vehicle start-up. However, known solutions are both time and energy consuming. By way of example, heating of the battery can be made by utilizing a heat pump with the cooling system of the battery, thus the heat pump is used to heat the coolant and cooling plate which in turn heats the battery, an approach both time consuming and with low heat efficiency.

Thus, there is a desire to improve heating systems for battery modules and in particular to improve quick heating systems in order for a battery electric vehicle to be operational within a reasonable time from the onset of heating of the batteries.

### SUMMARY

It is therefore an object of embodiments herein to provide an approach that overcomes or ameliorates at least one of the disadvantages of the prior art, or to provide a useful alternative.

The object above may be achieved by the subject matter disclosed herein. Embodiments are set forth in the appended dependent claims, in the following description and in the drawings.

The disclosed subject matter relates to a battery module for powering propulsion of an electric vehicle. The battery module comprises at least a first battery cell and at least a first battery cell spacer arranged adjacent to the at least first battery cell. An extension area of the at least first battery cell spacer extends over at least a portion of an extension area of the at least first battery cell, wherein the at least first battery cell spacer comprises an electrically insulated heating element.

The disclosed subject matter further relates to a battery module system, which battery module system comprises the battery module described hereinabove. The battery module system further comprises a power source adapted to enable heating of the electrically insulated heating element of the at least first battery cell spacer, and means adapted for connecting the electrically insulated heating element of the at least first battery cell spacer to the power source.

Moreover, the disclosed subject matter relates to an electric vehicle, which electric vehicle comprises one or more battery modules as described herein and/or one or more battery module systems as described herein.

Thereby, there is introduced an approach for enabling heating of a battery module of an electric vehicle in case the battery cells are below a desired operational temperature, in a time and energy efficient manner while keeping packing volume and complexity of the battery module low.

That is, since the at least first battery cell spacer is arranged adjacent to the at least first battery cell and further extends over at least a portion of the extension area of the at least first battery cell, the electrically insulated heating element comprised in the at least first battery cell spacer is brought in close proximity of the extension area of the at least first battery cell. Thereby, an effective heat transfer may be achieved between the electrically insulated heating element and the at least first battery cell, thus keeping thermal losses low.
Commonly, a prismatic Li-ion battery module comprises a plurality of rectangular battery cells arranged in parallel to one another and isolated from one another by means of an insulation film, or so called spacers, located intermediate two adjacent battery cells. The film, or spacer, serves to isolate the battery cells from one another as well as providing pressure relief and support to the battery cells within a battery module. With the introduced inventive concept, the battery cells of a battery module may be arranged adjacent to battery cell spacers comprising electrically insulated heating elements which can enable heating of the battery cells whilst a compact configuration of the battery module is maintained.

### BRIEF DESCRIPTION OF DRAWINGS

The various aspects of the non-limiting embodiments, including particular features and advantages, will be readily understood from the following detailed description and the accompanying drawings, in which:
**Fig. 1** illustrates a schematic view of an exemplifying electric vehicle comprising a battery module system according to embodiments of the disclosure;
**Fig. 2a** illustrates a schematic exploded view of an exemplifying battery module according to embodiments of the disclosure;
**Fig. 2b** illustrates a schematic plane view of the exemplifying battery module according to embodiments of the disclosure illustrated in Fig. 2a;
**Fig. 3a** illustrates a schematic view of an exemplifying battery module system; and
**Fig. 3b** illustrates a schematic view of an exemplifying battery pack.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to a battery module for powering propulsion of an electric vehicle, there will be disclosed an approach for enabling heating of a battery cell of the battery module, e.g. in case the battery cell is below a desired operational temperature upon start-up of the electrical vehicle, by utilizing a battery cell spacer which comprises an electrically insulated heating element.

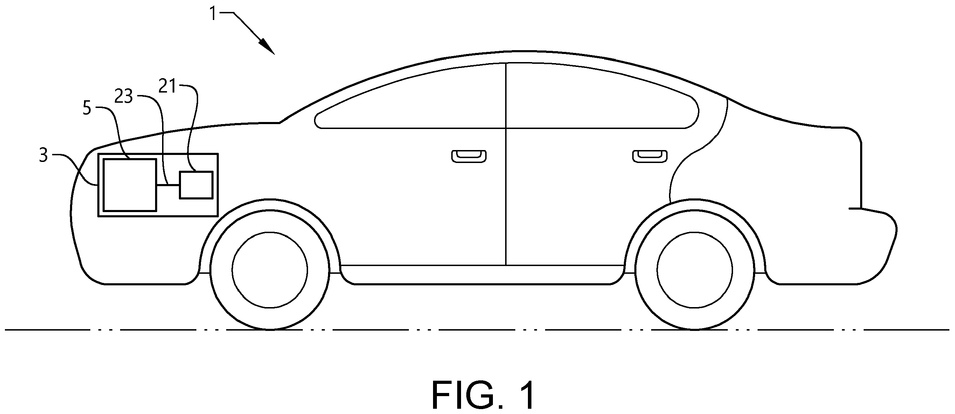

Referring now to the figures and **Fig. 1** in particular, there is depicted a schematic view of an exemplifying **electric vehicle 1** comprising a **battery module system** 3 for powering propulsion of the electric vehicle 1, according to embodiments of the disclosure. The electric vehicle 1, which may comprise the battery module system 3, may refer to any - e.g. known - electrically propelled vehicle, such as e.g. a passenger car. According to an example, the vehicle 1 may further potentially refer to an electric vehicle at least partly supporting autonomous driving.

The expression "battery module" may refer to a "battery module arrangement". The expression "for powering propulsion of' an electric vehicle may refer to "adapted for powering propulsion of' an electric vehicle, "for providing electric power to drive" an electric vehicle, "adapted to be comprised in" an electric vehicle", "adapted to be coupled with, connected to and/or in connection with" an electric vehicle and/or "of' an electric vehicle. The expression "electric vehicle" may refer to "EV", "battery electric vehicle", "BEV", "electrically propelled vehicle" and/or "vehicle adapted to use one or more electric motors for propulsion".

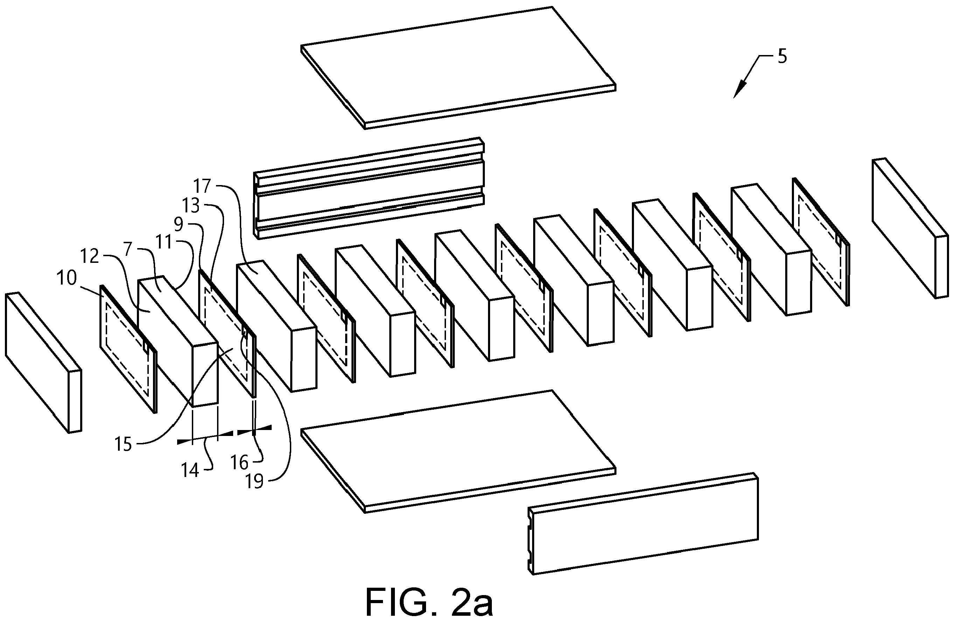

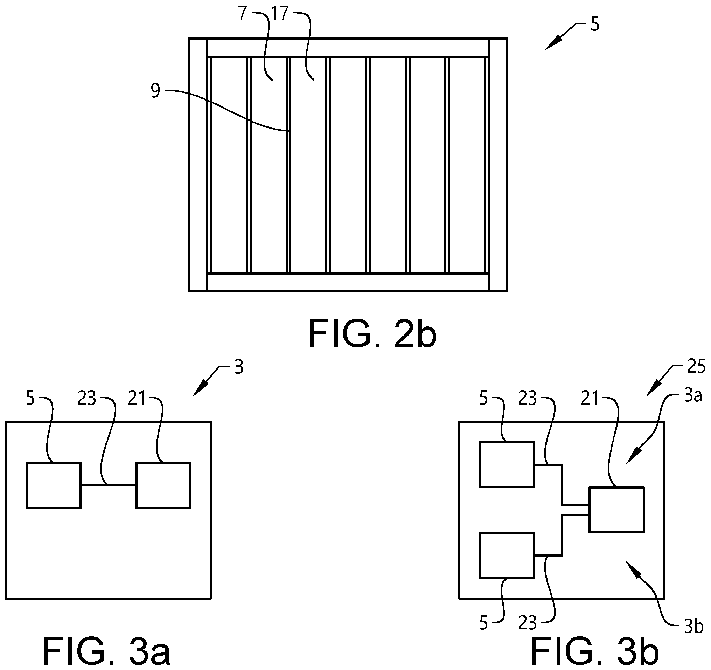

The exemplifying battery module system 3 in Fig. 1 comprises a **battery module 5** according to embodiments of the disclosure. In the following, the battery module 5 will be described in further detail with reference to Figs. 2a and 2b, before reverting to describing the battery module system 3.

**Figs. 2a** and **2b** show an exemplifying battery module 5 comprising a plurality of battery cells. The battery module 5 comprises at least a **first battery cell 7.** The battery module 5 further comprises at least a **first battery cell spacer 9** arranged adjacent to the at least first battery cell 7. An **extension area 13** of the at least first battery cell spacer 9 extends over at least a portion of an **extension area 11** of the at least first battery cell 7. In the exemplifying battery module 5, the extension area 13 of the at least first battery cell spacer 9 extends over the complete, or substantially complete, extension area 11 of the at least first battery cell 7. The at least first battery cell spacer 9 comprises an **electrically insulated heating element 15.**

The electrically insulated heating element 15 is intended to generate heat when connected to a power source, which heat is to be distributed to the at least first battery cell 7 and thereby enable heating the at least first battery cell 7.

The battery module 5 may further comprise **at least a second battery cell 17** arranged in parallel - or essentially in parallel - with the at least first battery cell 7, as disclosed in Figs. 2a and 2b. The at least first battery cell spacer 9 is arranged intermediate the at least first battery cell 7 and the at least second battery cell 17. In this way, the electrically insulated heating element 15 of the at least first battery cell spacer 9 may enable heating of the at least first battery cell 7 and the at least second battery cell 17 simultaneously, when connected to a power source.

The at least first battery cell 7 and the at least second battery cell 17 of the exemplifying battery module 5 are adapted to provide the electric power to drive the electric vehicle. The at least first battery cell 7 and the at least second battery cell 17 may be Li-ion battery cells.

The at least first battery cell spacer 9 may further be adapted to isolate the at least first battery cell 7 from the at least second battery cell 17. The at least first battery cell spacer 9 may comprise an insulation material, such as a polymer film. In this way, the at least first battery cell spacer 9 provides insulation between adjacent battery cells in the battery module 5. The insulation material may also serve as the electric insulation of the heating element 15 comprised in the at least first battery cell spacer 9. Hence, the at least first battery cell spacer 9 of the exemplifying battery module 5 provides a dual function in both providing insulation between the at least first battery cell 7 and the at least second battery cell 17, as well as enable heating of the at least first battery cell 7 and/or the at least second battery cell 17 when the electrically insulated heating element 15 is connected to a power source.

The expression "a battery module comprising at least a first battery cell" and "at least a second battery cell" may refer to "a battery module comprising one, two or more battery cells", as disclosed by the exemplifying battery module in Figs. 2a and 2b comprising more than two battery cells. Optionally, each battery cell in the exemplifying battery module 5 is arranged with a battery cell spacer. Further optionally, each battery cell spacer in the battery module 5 comprises an electrically insulated heating element. Hence, there may be alternative exemplifying battery modules comprising a mix of battery cell spacers, with and without electrically insulated heating elements. In other words, the number of battery cells and battery cell spacers comprising electrically insulated heating elements in the exemplifying battery module 5 may vary without departing from the inventive idea of enable heating of the battery cells via an electrically insulated heating element comprised in a battery cell spacer arranged adjacent to a battery cell.

Optionally, the battery module 5 may comprise at least five battery cell spacers 9, more preferably at least ten battery cell spacers 9, most preferably at least twenty battery cell spacers 9.

The at least first battery cell 7 and the at least second battery cell 17 in the exemplifying battery module 5 in Figs. 2a and 2b are prismatic and arranged in parallel with one another. In the following a more detailed description of the at least first battery cell 7 will follow. The at least second battery cell 17 may be described in a similar manner. Hence, the at least second battery cell 17 may be of the same type as the at least first battery cell 7. The at least first battery cell 7 thus has a rectangular shape, or a substantially rectangular shape with opposing main extension areas 11, 12 having dimensions significantly larger and perpendicular to a **thickness 14** of the at least first battery cell 7.
Optionally, as shown in the exemplifying battery module in Figs. 2a and 2b, at least a second battery cell spacer 10 may be arranged adjacent to the at least first battery cell 7 such that the at least first battery cell 7 is arranged with a respective battery cell spacer 9, 10 on each side of its main extension areas 11, 12. Optionally, the at least second battery cell spacer 10 also comprises an electrically insulated heating element 15. Accordingly, an advantageous configuration is provided for which the at least first battery cell 7 may be heated on both sides of its main extension areas 11, 12 simultaneously. Thereby, heating of the at least first battery cell 7 may be achieved in a time and energy efficient manner.

The at least first battery cell spacer 9 and the at least second battery cell spacer 10 respectively has a shape corresponding to that of the at least first battery cell 7 and the at least second battery cell 17. Hence, the at least first battery cell spacer 9 and the at least second battery cell spacer 10 in the exemplifying battery module 5 respectively also has a rectangular shape, or substantially rectangular shape. In this way, a stack of parallel or essentially parallel arranged battery cells 7, 17 and intermediate battery cell spacers 9, 10 may be formed having a compact configuration keeping the packing volume of the battery module 5 low. Furthermore, this configuration of battery cells 7, 17 and battery cell spacers 9, 10 enables the extension area of the battery cell spacer to extend over at least a portion of the extension area of the battery cell. Even further, in this way the extension area of the battery cell spacer, and the electrically insulated heating element comprised therein, abuts, or is in close contact to, the extension area of the battery cell. Thereby, the electrically insulated heating element 15 enables heating of the adjacently arranged battery cell in an effective manner.

Further schematically illustrated in Figs. 2a and 2b for the exemplifying battery module 5, are elements which may form part of a housing of the battery module and may thus be intended to enclose the arranged battery cells and battery cells spacers. The battery module may also comprise elements intended for cooling of the battery cells.

The exemplifying battery module 5 as described herein discloses features of a prismatic cell configuration.

It is envisaged other shapes, e.g. a square or a circular shape of the extensions area, and/or other configurations, of the battery cell and battery cell spacer within the inventive concept, still rendering the extension area of the at least first battery cell spacer to extend over at least a portion of the extension area of the at least first battery cell thereby enabling heating of the at least first battery cell.

The introduced inventive concept may also be used in a pouch battery cell arrangement. The at least first battery cell and the at least first battery cell spacer may be adapted to be arranged in a pouch cell configuration.

The expression "electrically insulated heating element" may refer to an element functioning as a resistive heater. The electrically insulated heating element may comprise a resistive heating element. Thus, when connected to a power source, current passing through the resistive heating element encounters resistance resulting in heating of the resistive element. The resistive heating element 15 may for example comprise a wire type resistive heater and/or foil type resistive heater and/or a laminated type resistive heater. The electrically insulated heating element 15 may for example comprise a metal material resistive heater and/or a ceramic material resistive heater and/or a polymer material resistive heater and/or a composite material resistive heater, such as a carbon fibre resistive heater. The electrically insulated heating element 15 may comprise any combination of the above-mentioned resistive heater types.

The heating element 15 being electrically insulated refer in this context to that it is electrically insulated to prevent short-circuiting due to contact with adjacent battery cells and further when connected to a power source. By way of example, the electrical insulation of the heating element may be achieved by enclosing the heating element in an insulation material forming a part of the battery cell spacer.

A positive effect of utilizing a resistive heater type as described above is that the thickness of the at least first batter cell spacer 9 can be kept small. A common inherent feature of the resistive heater types mentioned above is that they can be used to produce or manufacture a heating element 15 with a significantly small thickness compared to its extension area, such as a thickness of less than for example 1 mm. Accordingly, the at least first battery cell spacer 9 may further have a **thickness 16** significantly smaller than a thickness 14 of the at least first battery cell 7. Optionally, a thickness 16 of the at least first battery cell spacer 9, in a direction perpendicular to the extension area 13 of the at least first battery cell spacer 9, is less than 1.5 mm, preferably less than 1.2 mm, more preferably less than 1.1 mm, most preferably less than 1 mm. Thereby, an advantageously compact configuration of the at least first battery cell 7 and the at least first battery cell spacer 9 is achieved. The thickness 16 may potentially vary along and/or across the extension area.

The electrically insulated heating element 15 has an extension along the plane of the extension area 11 of the at least first battery cell spacer 9. It is envisaged that the portion of the extension area 13 of the at least first battery cell spacer 9 over which the electrically insulated heating element 15 is extended may vary, depending on for example factors such as what kind(s) of resistive heater type(s) is used and the amount of heat to be generated and how fast. To this end, the extent to which the electrically insulated heating element 15 extends over the extension area 11 of the at least first battery cell 7 may also vary. Optionally, the electrically insulated heating element 15 extends over at least 50 %, preferably over at least 60 %, most preferably over at least 75 % of the extension area 11 of the at least first battery cell 7.

As an alternative or complement, the electrically insulated heating element 15 may at least extend over at least the portion of the extension area 11 of the at least first battery cell 7 over which the extension area 13 of the battery cell spacer 9 extends.

Optionally, the electrically insulated heating element 15 may extend over the complete, or substantially complete, extension area 11 of the at least first battery cell 7 and/or over the complete, or substantially complete, extension area 13 of the at least first battery cell spacer 9.

The at least first battery cell spacer 9 of the exemplifying batter module 5 may further comprise **means 19** adapted for connecting the electrically insulated heating element 15 to a **power source 21,** see Figs. 1 and 3a. As such, the electrically insulated heating element 15 may be heated, when connected to the power source via the means 19, and thereby heat the at least first battery cell 7 in a time and energy efficient manner. Said means 19 may for instance be exemplified by an electric connector or electric cables or wiring.

Now reverting to the battery module system 3. An exemplifying battery module system 3 comprising a battery module 5 as described hereinabove is depicted in Fig. 3a. Further the battery module system 3 comprises a power source 21. The power source 21 may be located outside and/or exterior of the exemplifying battery module 5, as depicted in Figs. 1 and 3a. Further, the battery module system 3 comprises **means 23** adapted for connecting the electrically insulated heating element 15 to the power source 21, as described above. Said means 23 may for instance be exemplified by electric cables or wiring.

Optionally, the power source 21 comprises a 12V or 48V battery system, or an essentially 12V or essentially 48V battery system. Thereby, the battery module system 3 may support heating of the battery module 5 in a time and energy efficient manner. A further positive effect is that the battery module system 3 may utilize an already existing battery system or battery pack in the electric vehicle, normally used for other functions in the electric vehicle.

The disclosure also relates to a battery pack comprising one or more battery modules 5 as described herein.

The disclosure also relates to a **battery pack 25** comprising one or more battery module systems 3 as described herein. Optionally, the one or more battery module systems share a common power source, as shown in Fig. 3b in which two battery module systems 3a, 3b share a common power source 21.

Optionally a battery pack as described herein may comprise at least five battery cells, more preferably at least 20 twenty battery cells, most preferably at least one hundred battery cells.

Thus, the introduced battery module system 3 as described herein is adapted to enabling heating of the battery cells 7, 17 of the battery module 5 in a time and energy efficient manner, e.g. in case the battery cells are not at a desired operational temperature. A desired operational temperature of the battery cells, in this context, may be a pre-determined temperature set by the battery cell characteristics at which the battery cells has desired performance characteristics. A battery module system as described herein may further be adapted to receive input indicating that heating of the battery module is requested. The battery module system may even further be adapted to control heating of the battery cells to the desired operational temperature upon receiving input indicating that heating is requested.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

Various examples have been described. These and other examples are within the scope of the following claims.

## Claims

1. A battery module (5) for powering propulsion of an electric vehicle (1), the battery module comprising
at least a first battery cell (7) and at least a first battery cell spacer (9) arranged adjacent to the at least first battery cell (7),
an extension area (13) of the at least first battery cell spacer (9) extending over at least a portion of an extension area (11) of the at least first battery cell (7), wherein the at least first battery cell spacer (9) comprises an electrically insulated heating element (15).

2. The battery module (5) according to claim 1, further comprising at least a second battery cell (17) arranged in parallel with the at least first battery cell (7), wherein the at least first battery cell spacer (9) is arranged intermediate the at least first battery cell (7) and the at least second battery cell (17).

3. The battery module (5) according to claim 2, wherein the at least first battery cell spacer (9) is further adapted to isolate the at least first battery cell (7) from the at least second battery cell (17).

4. The battery module (5) according to any one of the proceeding claims, wherein the at least first battery cell spacer (9) comprises an insulation material, such as a polymer film.

5. The battery module (5) according to claim 4, wherein the electrically insulated heating element (15) is enclosed in the insulation material of the at least first battery cell spacer (9).

6. The battery module (5) according to any one of the preceding claims, wherein the electrically insulated heating element (15) is a resistive heating element, which resistive heating element comprises one or more of a group consisting of: wire type resistive heaters, foil type resistive heaters, thick film resistive heaters and laminate type resistive heaters.

7. The battery module (5) according to claim 6, wherein the resistive heating element comprises one or more of a group consisting of: metal material resistive heaters, ceramic material resistive heaters, polymer material resistive heaters and composite material resistive heaters, such as a carbon fibre resistive heater.

8. The battery module (5) according to any one of the preceding claims, wherein the electrically insulated heating element (15) of the at least first battery cell spacer (9) extends over at least 50 %, preferably over at least 60 %, and most preferably over at least 75 % of the extension area (11) of the at least first battery cell (7).

9. The battery module (5) according to any one of the preceding claims, wherein a thickness (16) of the at least first battery cell spacer (9), in a direction perpendicular to the extension area (13) of the at least first battery cell spacer (9), is less than 1.5 mm, preferably less than 1.2 mm, more preferably less than 1.1 mm, most preferably less than 1.0 mm.

10. The battery module (5) according to any one of the preceding claims, wherein the at least first battery cell spacer (9) comprises means (19) adapted to connect the electrically insulated heating element (15) to a power source (21).

11. A battery module system (3) comprising the battery module (5) according to any one of claims 1-10, the battery module system (3) further comprising
- a power source (21) adapted to enable heating of the electrically insulated heating element (15) of the at least first battery cell spacer (9), and
- means (23) adapted for connecting the electrically insulated heating element (15) of the at least first battery cell spacer (9) to the power source (21).

12. The battery module system (3) according to claim 11, wherein the power source (21) is located outside of the battery module (5).

13. The battery module system (3) according to claim 11 or 12, wherein the power source (21) comprises a 12V or a 48V battery system.

14. A battery pack comprising one or more battery modules (5) according to any one of claims 1-10 and/or one or more battery module systems (3) according to any one of claims 11 to 13.

15. An electric vehicle (1) comprising one or more battery modules (5) according to any one of claims 1-10, and/or one or more battery module systems (3) according to any one of claims 11-13, and/or one or more battery packs (25) according to claim 14.
